(19) **Europäisches Patentamt**
**European Patent Office**
**Office européen des brevets**

(11) **EP 2 520 042 B1**

(12) **FASCICULE DE BREVET EUROPEEN**

(45) Date de publication et mention
de la délivrance du brevet:
**05.09.2018 Bulletin 2018/36**

(51) Int Cl.:
***G06F 21/10*** *(2013.01)*       ***H04N 21/00*** *(2011.01)*
***H04L 9/08*** *(2006.01)*

(21) Numéro de dépôt: **10795709.4**

(22) Date de dépôt: **20.12.2010**

(86) Numéro de dépôt international:
**PCT/EP2010/070318**

(87) Numéro de publication internationale:
**WO 2011/080150 (07.07.2011 Gazette 2011/27)**

(54) **PROCÉDÉS DE DÉCHIFFREMENT, DE TRANSMISSION ET DE RÉCEPTION DE MOTS DE CONTRÔLE, SUPPORT D'ENREGISTREMENT ET SERVEUR POUR CES PROCÉDÉS**

VERFAHREN FÜR ENTSCHLÜSSELUNG, ÜBERTRAGUNG UND EMPFANG VON STEUERWORTEN, SPEICHERMEDIUM UND SERVER FÜR DIESE VERFAHREN

METHODS FOR DECRYPTING, TRANSMITTING AND RECEIVING CONTROL WORDS, STORAGE MEDIUM AND SERVER FOR SAID METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2009 FR 0959612**

(43) Date de publication de la demande:
**07.11.2012 Bulletin 2012/45**

(73) Titulaire: **Viaccess**
**92057 Paris La Défense (FR)**

(72) Inventeur: **MAGIS, Erwann**
**F-75017 Paris (FR)**

(74) Mandataire: **Colombo, Michel et al**
**Brevinnov**
**310 avenue Berthelot**
**69008 Lyon (FR)**

(56) Documents cités:
**EP-A- 1 705 915        US-A- 5 719 941**
**US-A1- 2007 124 807**

- **MENEZES, VANSTONE, OORSCHOT: "Handbook of Applied Cryptography", 1997, CRC PRESS LLC, USA, XP002591810, page 547 - page 555**
- **Menezes A J; Van Oorschot P C; Vanstone S A: "Handbook of Applied Cryptography- Chapter 13: Key Management Techniques", CRC PRESS LLC , 1 October 1996 (1996-10-01), pages 543-590, XP001525013, USA ISBN: 978-0-8493-8523-0 Retrieved from the Internet: URL:http://www.cacr.math.uwaterloo.ca/hac/**
- **L. FRANCIS, W. G. SIRETT, K. MAYES, L. MARKANTONAKIS: "Countermeasures for Attacks on Satellite TV Cards using Open Receivers", AUSTRALIAN COMPUTER SOCIETY, 2005, XP2333719,**

## Description

L'invention concerne des procédés de chiffrement, de transmission et de réception de mots de contrôle. L'invention concerne également un support d'enregistrement d'informations et un serveur de mots de contrôle pour la mise en oeuvre de ces procédés.

Il existe des procédés de déchiffrement de mots de contrôle pour un premier et au moins un deuxième terminal mécaniquement et électroniquement indépendants l'un de l'autre, dans lesquels :

- les premier et deuxième terminal transmettent, respectivement, des cryptogrammes $CW^*_{1,t}$ et $CW^*_{2,t}$ à un même serveur de mots de contrôle,
- en réponse, le serveur de mots de contrôle déchiffre les cryptogrammes $CW^*_{1,t}$ et $CW^*_{2,t}$ pour obtenir, respectivement, des mots de contrôle $CW_{1,t}$ et $CW_{2,t}$, les mots de contrôle $CW_{1,t}$ et $CW_{2,t}$ permettant de désembrouiller, respectivement, des premier et deuxième contenu multimédia simultanément diffusés sur, respectivement, des premier et deuxième canal, puis
- le serveur de mots de contrôle transmet les mots de contrôle $CW_{1,t}$ et $CW_{2,t}$, respectivement, aux premier et deuxième terminal.

Par contenu multimédia on désigne un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Il est connu de diffuser plusieurs contenus multimédias en même temps. Pour cela, chaque contenu multimédia est diffusé sur son propre canal. Le canal utilisé pour transmettre un contenu multimédia est également connu sous le terme de « chaine ». Un canal correspond typiquement à une chaine de télévision. Cela permet à un utilisateur de choisir simplement le contenu multimédia qu'il souhaite visualiser en changeant de canal.

Pour sécuriser et soumettre la visualisation des contenus multimédias à certaines conditions, comme la souscription d'un abonnement payant par exemple, les contenus multimédias sont diffusés sous forme embrouillée et non pas en clair. Plus précisément, chaque contenu multimédia est divisé en une succession de cryptopériode. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre. De plus, le mot de contrôle est généralement spécifique à un contenu multimédia. Ainsi, si à un instant donné N contenus multimédias sont simultanément diffusés sur N canaux, il existe N mots de contrôle différents employés chacun pour embrouiller l'un de ces contenus multimédias.

Ici, les termes « embrouiller » et « chiffrer » sont considérés comme des synonymes.

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Par exemple, les mots de contrôle nécessaires pour désembrouiller la (t+1)-ième cryptopériode sont reçus par chaque terminal pendant la t-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes. On désigne ici par cryptogramme une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia. Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète et la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète et la table associant à chaque référence un mot de contrôle en clair.

L'information secrète doit être préservée en lieu sûr. Pour cela, il a déjà été proposé de stocker l'information secrète :

- soit dans des processeurs de sécurité tel que des cartes à puce directement connectées à chacun des terminaux,
- soit, plus récemment, dans un serveur de mots de contrôle commun à plusieurs terminaux.

Dans ce dernier cas, les terminaux sont dépourvus de carte à puce. On parle alors de terminaux sans carte ou « cardless terminal » en anglais.

Le serveur de mots de contrôle est connecté à chacun des terminaux par un réseau grande distance de transmission d'informations tel que le réseau Internet. Lorsqu'un serveur de mots de contrôle est utilisé, les cryptogrammes des mots de contrôle sont d'abord transmis aux différents terminaux avant d'être renvoyés par ces terminaux vers le serveur de mots de contrôle. Cette façon de procéder présente plusieurs avantages. En particulier, le réseau de transmission d'informations utilisé pour diffuser les contenus multimédias et les cryptogrammes des mots de contrôle peut être différent de celui utilisé pour relier les terminaux au serveur de mots de contrôle. Par exemple, le réseau pour la diffusion des contenus multimédias et des cryptogrammes des mots de contrôle est un réseau unidirectionnel à large bande passante tel qu'un réseau satellitaire. A l'inverse, le réseau reliant les terminaux au serveur de mots de contrôle est un réseau bidirectionnel dont la bande passante peut être plus réduite.

Ensuite, cela simplifie la synchronisation temporelle entre la diffusion des contenus multimédias et la diffusion des cryptogrammes des mots de contrôle correspondants.

Le serveur de mots de contrôle a pour fonction de déchiffrer les cryptogrammes des mots de contrôle transmis par les terminaux pour ensuite retourner vers chacun de ces terminaux le mot de contrôle déchiffré. Ainsi, en quelque sorte, le serveur de mots de contrôle joue le rôle d'une carte à puce commune à plusieurs terminaux mécaniquement et électriquement indépendants les uns des autres. Des terminaux électroniquement indépendants les uns des autres sont des terminaux capables de fonctionner de façon autonome et ne présentant aucune partie électronique commune entre eux.

Lorsqu'un terminal a besoin d'un mot de contrôle pour désembrouiller un contenu multimédia, il envoie au serveur de mots de contrôle une requête contenant le cryptogramme du mot de contrôle. En réponse, le serveur de mots de contrôle déchiffre ce cryptogramme puis renvoie le mot de contrôle déchiffré au terminal qui peut alors désembrouiller le contenu multimédia souhaité.

Les contenus multimédias diffusés sur les différents canaux sont coordonnés temporellement entre eux. Par exemple, les instants de diffusion des contenus multimédias sont réglés pour respecter les horaires de diffusion indiqués sur une grille de programmes préétablie. Chaque terminal sur un canal donné reçoit donc sensiblement en même temps le même contenu multimédia.

Dans ces conditions, il arrive fréquemment que les utilisateurs changent de canal (ou chaîne) en même temps. Par exemple, un tel changement de canal simultané peut être provoqué par la diffusion d'une séquence de publicité sur le canal actuellement regardé. On dit que l'utilisateur « zappe ».

En réponse à ce changement de canal, chaque terminal transmet immédiatement une requête au serveur de mots de contrôle pour recevoir en réponse le mot de contrôle nécessaire au désembrouillage du contenu multimédia actuellement diffusé sur le nouveau canal regardé. Ainsi, un changement massif et simultané d'un canal vers un autre entraîne un pic de charge de travail pour le serveur de mots de contrôle.

La puissance de calcul du serveur de mots de contrôle est fonction de ce pic de charge. Ainsi, plus le pic de charge est élevé, c'est-à-dire plus le nombre maximal de requêtes à traiter dans un laps de temps prédéterminé est important, plus la puissance de calcul du serveur de mots de contrôle doit être importante.

Ces pics de charge de travail doivent être diminués autant que possible pour réduire la puissance de calcul du serveur de mots de contrôle tout en limitant les modifications apportées au système de transmission de contenu multimédia embrouillé.

De l'état de la technique est également connu de :

- MENEZS, VANSTONE, OORSCHOT : « Handbook of Applied Cryptography », 1997, CRC Press LLC, USA, pages 547-555,
- US2007/124807A1,
- US5719941A,
- L. Francis et Al : « Countermeasures for Attacks on Satellite TV Cards Using Open Receivers », 2005
- EP1705915A.

Dans le contexte d'une attaque par partage de carte, l'article de L. Francis décrit un serveur qui reçoit des cryptogrammes de mots de contrôle qui lui sont transmis par différents terminaux. En réponse, ce serveur renvoie à chacun de ces terminaux uniquement le mot de contrôle déchiffré correspondant au cryptogramme reçu. EP1705915A décrit une solution pour accélérer le changement de canal dans un contexte où ce sont les terminaux eux-mêmes qui déchiffrent les cryptogrammes des mots de contrôle.

L'invention vise à limiter les pics de charge du serveur de mots de contrôle. Elle a donc pour objet un procédé de déchiffrement conforme à la revendication 1.

Grâce au procédé ci-dessus, le premier terminal possède en avance le mot de contrôle $CW_{2,t}$ nécessaire pour désembrouiller le contenu multimédia simultanément diffusé sur le deuxième canal. Ainsi, si l'utilisateur bascule du premier canal vers le deuxième canal, il n'est pas nécessaire que le premier terminal transmette immédiatement une requête vers le serveur de mots de contrôle pour obtenir le mot de contrôle $CW_{2,t}$. On réduit donc les pics de charge du serveur de mots de contrôle en évitant la transmission systématique et immédiate d'un grand nombre de requêtes simultanées vers ce serveur de mots de contrôle en réponse à un changement de canal.

Pour mettre en oeuvre ce procédé, le premier terminal n'a pas besoin de transmettre le cryptogramme $CW^*_{2,t}$ au serveur de mots de contrôle avant le changement de canal. Ce procédé est donc simple à implémenter et minimise les modifications à apporter aux terminaux.

Par ailleurs, ce procédé réduit également le temps d'attente avant que le contenu multimédia diffusé sur le deuxième canal puisse être désembrouillé. En effet, le terminal n'a pas à envoyer immédiatement une requête vers le serveur de mots de contrôle puis à attendre le mot de contrôle $CW_{2,t}$ si celui-ci a déjà été transmis en avance.

L'invention a également pour objet un procédé de transmission de mots de contrôle conforme à la revendication 2.

Les modes de réalisation de ce procédé de transmission peuvent comporter une ou plusieurs des caractéristiques des revendications dépendantes.

L'invention a également pour objet un procédé de réception de mots de contrôle conforme à la revendication 7.

Les modes de réalisation de ce procédé de réception peuvent comporter une ou plusieurs des caractéristiques des revendications dépendantes.

Ces modes de réalisation du procédé de réception présente en outre les avantages suivants :

- retarder la transmission d'un cryptogramme nécessaire pour désembrouiller une cryptopériode suivante d'un contenu multimédia diffusé sur le même canal permet de lisser la charge de travail du serveur de mots de contrôle; et
- mémoriser uniquement le cryptogramme $E_{K1}(CW_{2,t})$ dans le terminal augmente la sécurité.

L'invention a également pour objet un support d'enregistrement d'informations contenant des instructions pour la mise en oeuvre d'un des procédés ci-dessus, lorsque ces instructions sont exécutées par un calculateur électronique.

Enfin, l'invention a également pour objet le serveur de mots de contrôle conforme à la revendication 12.

L'invention sera mieux comprise à la lecture de la description qui va suivre, donnée uniquement à titre d'exemple non limitatif et faite en se référant aux dessins sur lesquels :

- la figure 1 est une illustration schématique d'un système de diffusion de contenus multimédias embrouillés,
- la figure 2 est une illustration schématique d'une table de mots de contrôle utilisée dans le système de la figure 1,
- la figure 3 est un organigramme d'un procédé de transmission de contenus multimédias embrouillés à l'aide du système de la figure 1,
- la figure 4 est un organigramme d'un autre procédé de transmission de contenus multimédias embrouillés à l'aide du système de la figure 1, et
- la figure 5 est une illustration schématique d'un autre mode de réalisation d'une table de mots de contrôle utilisée en combinaison avec le procédé de la figure 4.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :

- « Functional Model of Conditional Access System », EBU Review, Technical European Broadcasting Union, Brussels, BE, n° 266, 21 décembre 1995.

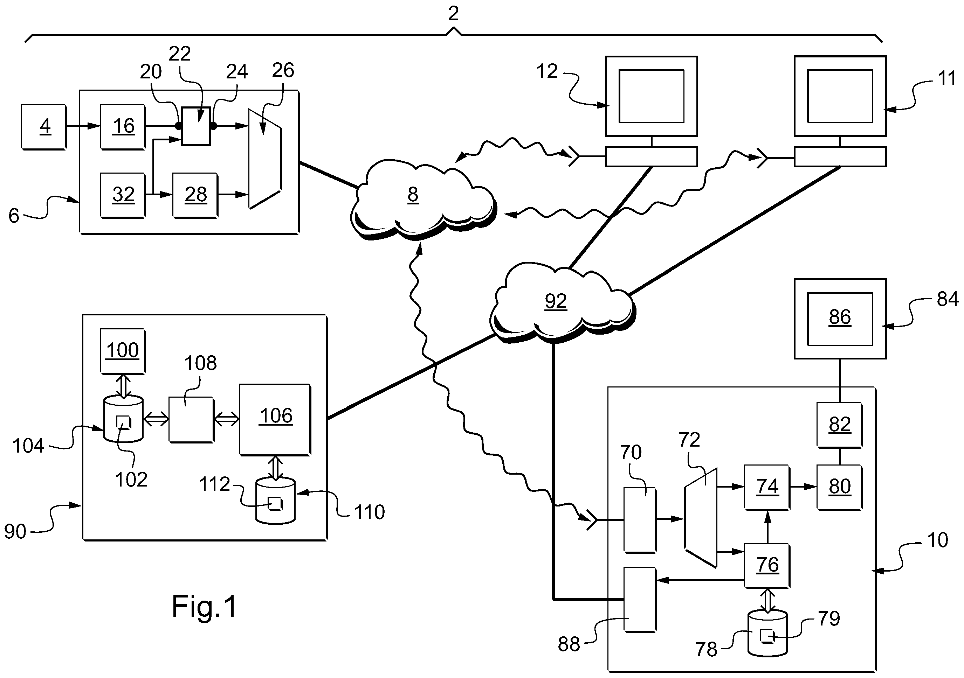

La figure 1 représente un système 2 d'émission et de réception de contenus multimédias. Un contenu multimédia correspond, par exemple, à une séquence d'un programme audiovisuel tel qu'une émission de télévision ou un film.

Les contenus multimédias en clair sont générés par une ou plusieurs sources 4 et transmis à un dispositif 6 de diffusion simultanée vers une multitude de dispositifs de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois dispositifs 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des dispositifs de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle $CW_{i,t}$ qui lui est fourni, ainsi qu'à un système 28 d'accès conditionnel plus connu sous l'acronyme CAS (Conditional Access System), par un générateur 32 de clés. L'indice $\underline{i}$ est un identifiant du canal sur lequel est diffusé le contenu mulimédia embrouillé et l'indice $\underline{t}$ est un identifiant de la cryptopériode embrouillée avec ce mot de contrôle.

Typiquement, cet embrouillage est conforme à une norme telle que la norme DVB-CSA (Digital Video Broadcasting - Common Scrambling Algorithm), ISMA Cryp (Internet Streaming Media Alliance Cryp), IPsec (Internet Protocol Security keying information Resource Record Working Group), SRTP (Secure Real-time Transport Protocol), etc.

Le système 28 génère des messages ECM (Entitlement Control Message) contenant au moins le cryptogramme $CW^*_{i,t}$ du mot de contrôle $CW_{i,t}$ généré par le générateur 32 et utilisé par l'embrouilleur 22 pour chaque cryptopériode de chaque contenu multimédia. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 insère également dans chaque ECM :

- l'identifiant $i$ du canal,
- un instant $t_{diff}$ de première diffusion de l'ECM par le dispositif 6, et
- des droits d'accès DA destinés à être comparés à des titres d'accès acquis par l'utilisateur.

Le même identifiant $i$ est inséré dans tous les messages ECM contenant un cryptogramme $CW^*_{i,t}$ pour le désembrouillage des contenus multimédias diffusés sur un même canal.

A titre d'illustration, ici, l'embrouillage et le multiplexage des contenus multimédias est conforme au protocole DVB-Simulcrypt. Dans ce cas, l'identifiant $i$ peut correspondre à un couple « channel ID/stream ID » unique sur lequel sont envoyées toutes les requêtes de génération de message ECM pour ce canal.

Par exemple, les terminaux 10 à 12 sont identiques et seul le terminal 10 est décrit plus en détail.

Le dispositif 10 de réception comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM et EMM (Entitlement Management Message) à un processeur 76. Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du dispositif 10. Cette robustesse est par exemple obtenue en implémentant un module logiciel dédié à la protection des informations secrètes.

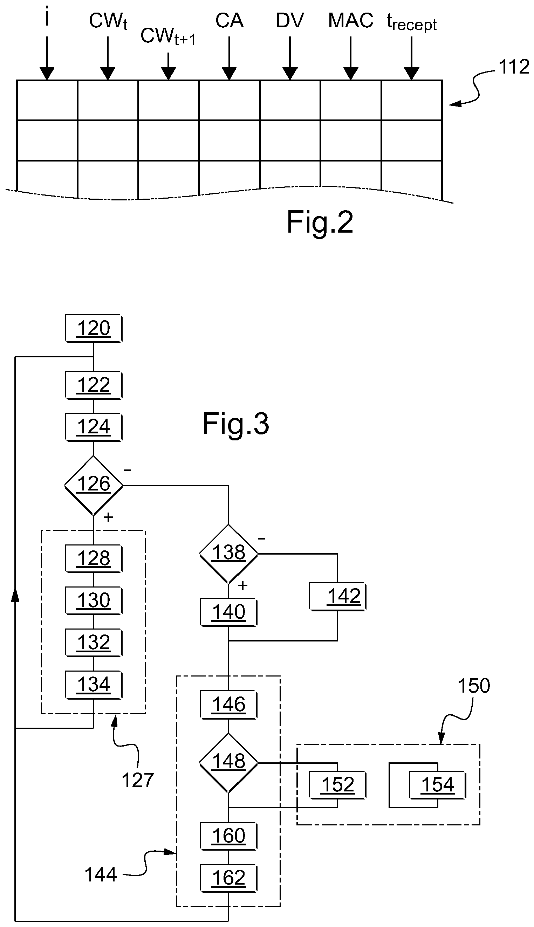

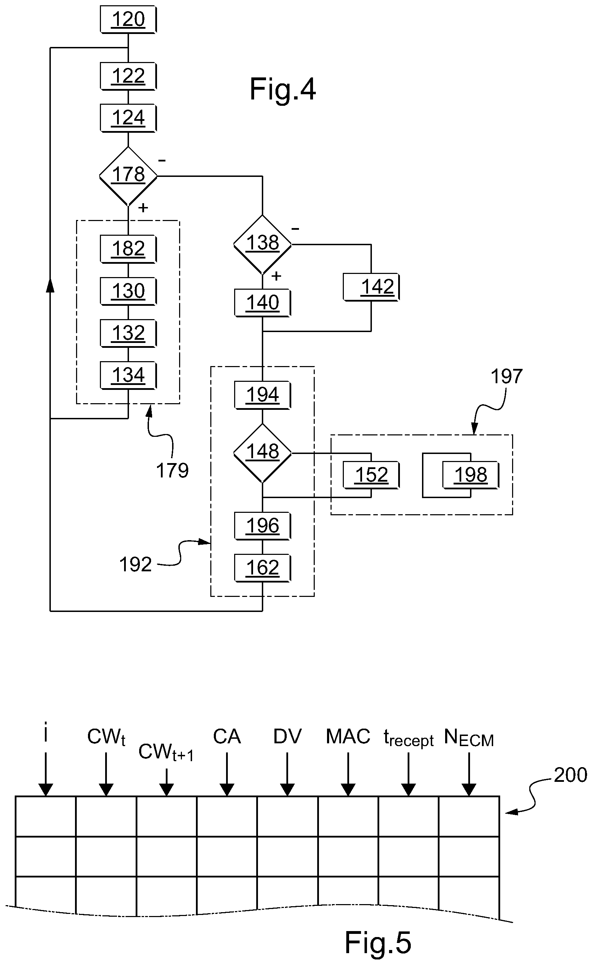

Le processeur 76 est par exemple réalisé à l'aide de calculateurs électroniques programmables aptes à exécuter des instructions enregistrées sur un support d'enregistrement d'informations. A cet effet, le processeur 76 est connecté à une mémoire 78 contenant les instructions nécessaires pour l'exécution du procédé des figures 3 ou 4.

La mémoire 78 contient également :

- un certificat cryptographique pour authentifier le terminal 10, et
- une table locale 79 de mots de contrôle.

Le désembrouilleur 74 désembrouille le contenu multimédia embrouillé à partir du mot de contrôle transmis par le processeur 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur un afficheur 84 équipé d'un écran 86.

L'afficheur 84 affiche en clair le contenu multimédia sur l'écran 86.

Le terminal 10 comprend également un émetteur 88 permettant d'établir une connexion sécurisée avec une tête de réseau 90 par l'intermédiaire d'un réseau 92 de transmission d'informations. Par exemple, le réseau 92 est un réseau grande distance de transmission d'informations et plus précisément un réseau à commutation de paquets tel que le réseau Internet. La connexion sécurisée est par exemple un tunnel sécurisé.

La tête de réseau 90 comprend un module 100 de gestion des titres d'accès des différents utilisateurs du système 2. Ce module 100 est plus connu sous le terme anglais de « subscriber authorization system ». Ce module 100 génère et maintien à jour une base de données 102. La base de données 102 associe à chaque identifiant d'utilisateur les titres d'accès acquis par cet utilisateur. Cette base de données 102 est stockée dans une mémoire 104.

La tête de réseau 90 comprend également un serveur 106 de mots de contrôle connecté à un module 108 de vérification de droit d'accès et à une mémoire 110 contenant une table 112 de mots de contrôle. Typiquement, le serveur 106 est réalisé à partir de calculateurs électroniques programmables aptes à exécuter des instructions enregistrées sur un support d'enregistrement d'informations. A cet effet, la mémoire 110 comprend également des instructions pour l'exécution du procédé de la figure 3 ou 4.

Un exemple de structure de la table 112 est représenté plus en détail sur la figure 2. Chaque ligne de la table 112 correspond à un enregistrement. La table 112 contient plusieurs enregistrements. Chaque enregistrement correspond à un message ECM. Chacun de ces enregistrements contient les champs suivants :

- un champ $i$ contenant l'identifiant du canal diffusé,
- un champ $CW_t$ contenant le mot de contrôle $CW_{i,t}$ utilisé pour embrouiller la cryptopériode $t$ du contenu multimédia diffusé sur le canal $i$,
- un champ $CW_{t+1}$ contenant le mot de contrôle $CW_{i,t+1}$ utilisé pour embrouiller la cryptopériode t+1 immédiatement consécutive du contenu multimedia diffusé sur le canal $i$,

- un champ CA contenant les conditions d'accès au contenu multimédia,
- un champ DV contenant la durée de validité des mots de contrôle $CW_{i,t}$ et $CW_{i,t+1}$
- un champ MAC contenant des informations permettant de vérifier l'intégrité du message ECM reçu, et
- un champ $t_{recept}$ contenant l'instant de réception du message ECM utilisé pour obtenir la paire de mots de contrôle $CW_{i,t}/CW_{i,t+1}$.

La structure de la table 79 est par exemple identique à la structure de la table 112.

Le fonctionnement du système 2 va maintenant être décrit plus en détail en regard du procédé de la figure 3.

Initialement, lors d'une étape 120, le dispositif 6 diffuse plusieurs contenus multimédias différents simultanément sur différents canaux. Sur chaque canal, la cryptopériode t et la cryptopériode suivante t+1 sont embrouillées avec les mots de contrôle, respectivment, $CW_{i,t}$ et $CW_{i,t+1}$. Les messages ECM contenant les cryptogrammes $CW^*_{i,t}$ et $CW^*_{i,t+1}$ des mots de contrôle $CW_{i,t}$ et $CW_{i,t+1}$ sont multiplexés avec les contenus multimédias diffusés. Ce multiplexage permet de synchroniser la diffusion des mots de contrôle avec la diffusion des contenus multimédias. Typiquement, les messages ECM sont répétés plusieurs fois au sein d'une même cryptopériode. Par exemple, les messages ECM sont répétés toutes les 0,1 seconde à 0,5 seconde. La durée d'une cryptopériode est supérieure à dix secondes et, de préférence, supérieure à 5 ou 10 minutes afin de limiter davantage la sollicitation des serveurs de mots de contrôles .

Les contenus multimédias embrouillés sont reçus sensiblement en même temps par chacun des terminaux 10 à 12. Les étapes suivantes sont donc exécutées sensiblement en parallèle pour chacun de ces terminaux. On suppose également que les différents terminaux désembrouillent simultanément chacun un contenu multimédia diffusé sur un canal respectif. Les étapes suivantes sont décrites dans le cas particulier du terminal 10.

Lors d'une étape 122, les contenus multimédias embrouillés avec des messages ECM sont reçus par le récepteur 70.

Ensuite, lors d'une étape 124, le démultiplexeur 72 extrait le contenu multimédia embrouillé correspondant au canal i dont le désembrouillage est actuellement demandé par l'utilisateur. Lors de l'étape 124, le démultiplexeur 72 extrait également uniquement les messages ECM contenant les cryptogrammes des mots de contrôle permettant de désembrouiller ce même canal. Le multiplexeur 72 transmet le contenu multimédia extrait vers le désembrouilleur 74. Les messages ECM extraits sont quant à eux transmis au processeur 76.

Lors d'une étape 126, le processeur 76 :

- recherche si la signature MAC du message ECM transmis est déjà présente dans sa table locale 79, et
- vérifie que les mots de contrôle associés à cette signature sont valides à l'aide de la durée de validité DV.

Si les mots de contrôle trouvés dans la table 79 sont valides, alors le terminal procède à une phase 127 de désembrouillage du contenu multimedia diffusé sur le canal i.

Plus précisément, lors d'une étape 128, le processeur 76 envoie au désembrouilleur 74 les mots de contrôle $CW_{i,t}$ et $CW_{i,t+1}$ associés à cette signature MAC dans la table 79. Aucune requête pour déchiffrer les cryptogrammes $CW^*_{i,t}$ et $CW^*_{i,t+1}$ n'est immédiatement transmise au serveur 106.

En réponse, le désembrouilleur, lors d'une étape 130, désembrouille le contenu multimédia reçu à l'aide de cette paire de mots de contrôle $CW_{i,t}/CW_{i,t+1}$.

Lors d'une étape 132, le contenu multimédia désembrouillé est ensuite décodé par le décodeur 80 puis transmis à la carte vidéo 82.

Enfin, lors d'une étape 134 la carte vidéo 82 transmet le signal vidéo au dispositif d'affichage 84 pour que le contenu multimédia s'affiche sur l'écran 86 de manière directement perceptible et compréhensible par un être humain.

Si la signature MAC ne se trouve pas dans la table 79 ou si les mots de contrôle associés ont expiré, alors le processeur 76 procède à une étape 138 lors de laquelle il vérifie si l'utilisateur à changer de canal. Par exemple, il compare l'identifiant i de canal contenu dans le message ECM reçu à l'identifiant de canal contenu dans le précédent message ECM reçu.

Dans l'affirmative, lors d'une étape 140, le terminal 10 envoie immédiatement une requête vers le serveur 106 pour déchiffrer les cryptogrammes $CW^*_{i,t}$ et $CW^*_{i,t+1}$ contenu dans le message ECM reçu. Cette requête contient le message ECM reçu et donc la paire de cryptogrammes $CW^*_{i,t}/CW^*_{i,t+1}$ ainsi qu'un identifiant de l'utilisateur du terminal ayant envoyé la requête. Elle est transmise au serveur 106 par l'intermédiaire de l'émetteur 88 et du réseau 92. Tous les échanges d'informations entre le terminal et le serveur 106 se font pas l'intermédiaire d'un tunnel sécurisé établi au travers du réseau 92. L'établissement du tunnel nécessite l'authentification et l'identification du terminal par le serveur 106 par exemple à l'aide du certificat cryptographique contenu dans la mémoire 78.

Dans la négative, lors d'une étape 142, le processeur 76 retarde la transmission de cette requête. Pour cela, le processeur 76 détermine un délai d'attente avant de déclencher l'envoi de la requête vers le serveur 106. Ce délai d'attente est déterminé de manière à lisser les instants d'envoi de ces requêtes par différents terminaux ayant reçu en même temps ce nouveau message ECM. Le délai d'attente est cependant choisi systématiquement suffisamment court pour permettre de recevoir la paire de mots de contrôle $CW_{i,t+1}/CW_{i,t+2}$ déchiffrés avant la fin de la cryptopériode courante t. Par exemple, lors de l'étape 142, le processeur 76 tire de façon aléatoire ou pseudo-aléatoire un nombre et détermine en fonction de ce nombre aléatoire la durée d'attente qui doit être appliquée. Après la durée d'attente, la requête est envoyée au serveur 106.

Ce lissage temporel des instants d'envoi des requêtes vers le serveur 106 par les différents terminaux utilisant le même serveur de mots de contrôle permet de limiter l'apparition de pic de charge. En particulier, cela évite d'avoir un pic de charge en réponse à chaque première diffusion d'un nouvel l'ECM.

Lors d'une phase 144, le serveur 106 répond aussi vite que possible à la requête envoyée à l'issue de l'étape 140 ou 142.

Par exemple, en réponse à la réception d'une telle requête, lors d'une étape 146, le serveur 106 sélectionne des enregistrements dans la table 112 pour construire une nouvelle table locale pour ce terminal. Pour cela, le module 108 extrait de la base 102 les titres d'accès correspondant à l'identifiant d'utilisateurcontenu dans la requête. Ensuite, le serveur 106 sélectionne dans la table 112 uniquement les mots de contrôle associés à des droits d'accès DA correspondant aux titres d'accès extraits. Ensuite, cette table locale est limitée aux N paires de mots de contrôle correspondant aux N canaux vers lesquels il est le plus probable que l'utilisateur zappe, où N est un nombre entier supérieur à un et, de préférence, supérieur à deux ou dix. A cet effet, le serveur 106 construit et utilise des indices $P_i$ associé à chaque canal i. Ces indices $P_i$ sont représentatifs de la probabilité que l'utilisateur change vers le canal i. A titre d'illustration, ici, l'indice $P_i$ est la valeur d'un compteur $C_i$. Pour chaque canal i, un compteur $C_i$ dénombre le nombre de fois où une requête pour déchiffrer une paire de mots de contrôle $CW_{i,t}/CW_{i,t+1}$ a été reçue par le serveur 106 pendant une fenêtre glissante. Typiquement, la durée $S_1$ de la fenêtre glissante est supérieure à au moins une et, de préférence, à plusieurs cryptopériodes. Par exemple, la durée $S_1$ est comprise entre 30 secondes et 5 minutes. Le compteur $C_i$ est incrémenté d'un pas quel que soit le terminal ayant émis la requête pour obtenir un mot de contrôle permettant de désembrouiller le canal i. La valeur du compteur $C_i$ est donc égale au nombre de fois où pendant la durée $S_1$ le serveur 106 a reçu une requête pour déchiffrer un mot de contrôle nécessaire au désembrouillage de ce canal. Ainsi, la valeur du compteur $C_i$ est d'autant plus grande que le nombre de terminaux désembrouillant le canal i est important. La valeur des compteurs $C_i$ indiquent donc quels sont les canaux les plus demandés par les utilisateurs. On considère dans ce mode de réalisation que plus un canal i est demandé plus la probabilité qu'un terminal change de son canal actuel pour désembrouiller le canal i est importante. Par exemple, le compteur $C_i$ est mémorisé dans la mémoire 110.

Ensuite, lors d'une étape 148, le serveur 106 vérifie si l'ECM contenu dans la requête du terminal 10 a déjà été reçu. Par exemple, pour cela, il compare la signature MAC de l'ECM reçu aux signatures MAC contenues dans la table 112.

Si la signature MAC n'est pas déjà dans la table 112, cela signifie que ce message ECM est reçu pour la première fois par le serveur 106. Le serveur 106 procède alors à une phase 150 de mise à jour de la table 112. Cette phase débute par une étape 152 lors de laquelle le serveur 106 déchiffre la paire de cryptogrammes $CW^*_{i,t}/CW^*_{i,t+1}$ contenue dans l'ECM reçu. Lors de l'étape 152, le serveur 106 calcule également une durée de validité DV pour les mots de contrôle ainsi déchiffrés. Par exemple, cette durée de validité est calculée à l'aide de la formule suivante :

$$DV = t_{diff} + 2 \times CP - t_{proc}$$

où

- $t_{diff}$ est l'instant de première diffusion de l'ECM par le dispositif 6, cet instant étant contenu dans l'ECM reçu,
- CP est la durée connue d'une cryptopériode, et
- $t_{proc}$ est une valeur prédéterminée correspondant sensiblement au temps de transmission d'un message ECM du dispositif 6 jusqu'au serveur 106 et de traitement de ce message par le serveur 106 et le terminal.

Ensuite le serveur 106 ajoute un nouvel enregistrement dans la table 112. Ce nouvel enregistrement contient :

- l'identifiant i du canal contenu dans l'ECM,
- la nouvelle paire de mots de contrôle $CW_t/CW_{t+1}$,
- les droits d'accès DA,
- la signature MAC de l'ECM reçu,
- la durée de validité DV calculée, et
- l'instant $t_{recept}$ de réception de l'ECM par le serveur 106.

La phase 150 comprend également une étape 154 de gestion de la fenêtre glissante lors de laquelle le serveur vérifie si la différence entre l'instant courant $t_c$ et l'instant de réception $t_{recept}$ d'un enregistrement dans la table 112 ne dépasse pas la durée $S_1$. Dans l'affirmative, l'enregistrement correspondant est effacé de la table 112. En même temps, le compteur $C_i$ associé à l'identifiant i de l'enregistrement effacé est décrémenté d'un pas. Dans le cas où le seuil $S_1$ n'est pas franchi, l'enregistrement n'est pas effacé et reste contenu dans la table 112.

L'étape 154 est réitérée à intervalle régulier de manière à effacer les enregistrements de la table 112 devenus obsolètes.

Si le message ECM contenu dans la requête est déjà dans la table 112 ou à l'issu de l'étape 152, le serveur 106 procède à une étape 160 lors de laquelle il incrémente le compteur $C_i$ associé à l'identifiant $i$ contenu dans l'ECM traité.

Lors d'une étape 162, le serveur 106 vérifie si les droits d'accès DA contenu dans le message ECM reçu correspondent aux titres d'accès de l'utilisateur ayant transmis ce message ECM. Dans l'affirmative et si la table locale de mots de contrôle construite lors de l'étape 146 ne contient pas déjà la paire $CW_{i,t}/CW_{i,t+1}$, l'enregistrement créé à partir de l'ECM reçu est ajouté dans cette table locale.

Dans la négative, aucun enregistrement contenant la paire $CW_{i,t}/CW_{i,t+1}$ n'est ajouté à la table locale.

Enfin, le serveur 106 transmet au terminal 10, en réponse à sa requête, la table locale construite par le serveur 106. Cette nouvelle table locale reçue par le terminal remplace alors la table 79 précédemment utilisée par le terminal 10.

Grâce à ce procédé, lorsqu'un grand nombre d'utilisateurs changent de canal en même temps, la probabilité que le mot de contrôle nécessaire au désembrouillage du nouveau canal soit déjà contenu dans la table 79 est importante ce qui permet de limiter les pics de charge du serveur 106 consécutifs à un changement de canal simultané par un grand nombre d'utilisateurs.

On notera cependant que si la table locale 79 contient la paire $CW_{i,t}/CW_{i,t+1}$ pour le canal $i$ et que le changement de canal se produit pendant la cryptopériode $t+1$, alors le terminal envoie immédiatement une requête au serveur 106 pour obtenir la paire $CW_{i,t+1}/CW_{i,t+2}$. En effet, la signature MAC du message ECM contenant la paire $CW_{i,t+1}/CW_{i,t+2}$ n'est pas la même que celle du message ECM contenant la paire $CW_{i,t}/CW_{i,t+1}$. Il peut être souhaitable de disposer d'un procédé similaire à celui de la figure 3 mais qui permet au terminal d'exploiter le mot de contrôle $CW_{i,t+1}$ contenu dans la table locale 79 pour commencer à désembrouiller immédiatement le contenu multimédia diffusé sur le canal $i$ sans avoir à envoyer immédiatement une requête au serveur 106.

Le procédé de la figure 4 permet en outre de satisfaire ce souhait. Pour cela, un numéro d'ordre $N_{ECMi}$ est inséré dans chaque message $ECM_{i,t}$ pour identifier le message $ECM_{i,t}$ précédent le message $ECM_{i,t+1}$. Le numéro $N_{ECMi}$ est inséré dans chaque message ECM par le dispositif 6.

Pour la mise en oeuvre du procédé de la figure 4, la structure des tables 79 et 112 est modifiée pour correspondre à celle de la table 200 (figure 5). La table 200 est identique à la table 112 à l'exception du fait qu'elle comporte pour chaque enregistrement un champ supplémentaire $N_{ECMi}$ correspondant au numéro d'ordre du message ECM associé à un canal $i$ particulier.

De plus, dans le procédé de la figure 4, la sélection des mots de contrôle est modifiée pour tenir compte uniquement du comportement passé de l'utilisateur ayant émis la requête vers le serveur 106. A cet effet, chaque compteur $C_i$ est remplacé par des compteurs $C_{ij}$,

où l'indice $i$ est un identifiant du canal et l'indice $j$ est un identifiant de l'utilisateur du terminal. Chaque compteur $C_{ij}$ dénombre le nombre de fois où l'utilisateur $j$ a envoyé une requête pour désembrouiller le canal $i$ pendant la fenêtre glissante de durée $S_1$. Ce compteur $C_{ij}$ n'est donc pas modifié par les informations contenues dans des requêtes provenant d'autres terminaux que celui utilisé par l'utilisateur $j$. La valeur de chacun de ces compteurs $C_{ij}$ est donc un indice $P_{ij}$ représentatif de la probabilité que l'utilisateur $j$ change de canal pour passer au canal $i$. La sélection des mots de contrôle incorporés dans la table locale construite par le serveur 106 pour cet utilisateur $j$ se fait en fonction de l'indice $P_{ij}$. Cela permet d'adapter la construction de la table locale pour l'utilisateur $j$ en fonction de son comportement passé.

Le procédé de la figure 4 est identique au procédé de la figure 3 sauf que l'étape 126 et les phases 127 et 144 sont remplacées, respectivement, par l'étape 178 et des phases 179 et 192.

Lors de l'étape 178, le processeur 76 vérifie si un mot de contrôle valide requis pour désembrouiller le contenu multimédia diffusé est déjà présent dans la table 79. A cet effet, la durée de validité DV associée à l'identifiant $i$ dans la table 79 est comparée à l'instant courant $t_c$. De plus, le processeur 76 vérifie également que le numéro d'ordre $N_{ECMi}$ contenu dans le message ECM reçu est égal au numéro d'ordre $N_{ECMi}$ associé à l'identifiant $i$ dans la table 79 ou au numéro d'ordre précédent.

Dans l'affirmative, le processeur 76 procède à la phase 179 de désembrouillage du contenu multimédia diffusé sur le canal $i$. Cette phase 179 est identique à la phase 127 à l'exception que l'étape 128 est remplacée par une étape 182. Cette étape 182 est identique à l'étape 128 mais en plus des opérations précédemment décrites, le processeur 76 envoie au désembrouilleur 74 la paire de mots de contrôle $CW_{i,t-1}/CW_{i,t}$ si le numéro d'ordre $N_{ECMi}$ contenu dans la table 79 est égal au numéro d'ordre reçu $N_{ECMi}-1$.

Ainsi, même en réponse au changement du canal pendant la cryptopériode $t+1$, la réception d'un message ECM contenant les cryptogrammes $CW^*_{i,t}/CW^*_{i,t+1}$ ne déclenche pas l'envoi immédiat d'une nouvelle requête vers le serveur 106. Au contraire, cette requête est retardée de manière à lisser la transmission de ces requêtes vers le serveur 106 pour éviter des pics de charge.

La phase 192 est identique à la phase 144 à l'exception que les étapes 146, 160 et 162 sont remplacées par des étapes 194, 196 et 198.

L'étape 194 est identique à l'étape 146 sauf que ceux sont seulement les indices $P_{ij}$ associés à l'utilisateur $j$. qui sont utilisés pour sélectionner les enregistrements à inclure dans la table locale construite par le serveur 106.

L'étape 196 est identique à l'étape 160 sauf que seul le compteur $C_{ij}$ spécifique à l'utilisateur $j$ et au canal $i$ est incrémenté à chaque fois qu'une nouvelle requête pour désembrouiller ce canal est reçue par le serveur 106.

La phase 150 est également remplacée par une phase 197 identique à la phase 150 à l'exception que l'étape 154 est remplacée par une autre étape 198 de gestion de la fenêtre glissante. Lors de l'étape 198, tous les compteurs $C_{ij}$ associés au canal $\underline{i}$ de l'enregistrement effacé sont décrémentés en même temps. Par conséquent, la durée $S_1$ peut être beaucoup plus grande que dans le cas du procédé de la figure 3. Par exemple, la durée $S_1$ est comprise entre une et quatre semaines.

Le procédé de la figure 4 présente plusieurs avantages. En particulier, il permet le désembrouillage d'un nouveau canal sans transmettre immédiatement une nouvelle requête au serveur 106 à partir du moment où l'un des deux mots de contrôle d'une paire de mots de contrôle peut valablement être utilisé pour désembrouiller ce canal.

Ensuite, l'utilisation des indices $P_{ij}$ permet d'augmenter la probabilité que lors d'un changement de canal le mot de contrôle nécessaire soit déjà contenu dans la table 79. Ceci limite donc encore plus les pics de charge.

De nombreux autres modes de réalisation sont possibles. En particulier, de nombreuses autres possibilités existent pour sélectionner les enregistrements de la table 112 utilisés pour construire la table 79. Dans une première variante, la table locale de mots de contrôle est construite en combinant les enseignements donnés en regard des figures 3 et 4. Par exemple, la table locale est construite par le serveur 106 en sélectionnant des enregistrements en fonction à la fois des indices $P_i$ et $P_{ij}$.

Dans une autre variante, au moins certains des enregistrements à sélectionner sont identifiés manuellement par l'utilisateur du terminal 10. Par exemple, lors d'une phase d'initialisation, l'utilisateur du terminal 10 interagit avec celui-ci pour acquérir une liste d'identifiants de canaux entre lesquels l'utilisateur souhaite pouvoir naviguer rapidement. Cette liste est transmise au serveur 106 qui l'enregistre. Ensuite, à chaque fois qu'un message ECM est transmis par ce terminal, les enregistrements correspondants aux canaux référencés dans la liste sont systématiquement incorporés dans la table locale de mots de contrôle construite par le serveur 106.

D'autres indices de probabilités que ceux décrits précédemment sont utilisables pour sélectionner les enregistrements à incorporer dans la table locale. Par exemple, l'indice peut également être fonction du canal de départ désembrouillé avant le changement de canal.

Dans un mode de réalisation très simplifié, l'ensemble des mots de contrôle contenus dans la table 112 et correspondant aux titres d'accès de l'utilisateur sont envoyés au terminal en réponse à chaque requête de ce terminal. Ainsi, les différents compteurs ou indices permettant de sélectionner un nombre limité d'enregistrements parmi l'ensemble des enregistrements contenus dans la table 112 sont omis.

L'identifiant de canal incorporé dans le message ECM peut être généré par le terminal lui-même et incorporé uniquement dans la requête transmise au serveur de mots de contrôle. Dans ce cas, il n'est pas nécessaire que cet identifiant de canal soit incorporé dans les messages ECM construits par le système 28.

La mise à jour de la table 79 n'est pas nécessairement déclenchée par la réception d'un nouveau message ECM pour le canal actuellement demandé. Par exemple, dans un autre mode de réalisation, une requête de mise à jour de la table 79 est automatiquement envoyée au serveur 106 par le terminal dès que la durée de validité des mots de contrôle contenus dans cette table pour un ou plusieurs canaux expirent même si ces canaux ne sont pas actuellement désembrouillés. L'envoie d'une requête de mise à jour de la table 79 peut également être déclenché dès que le nombre de mots de contrôle pour lesquels la durée de validité a expiré dépasse un seuil prédéterminé. De préférence, ce seuil est exprimé en pourcentage du nombre total de mots de contrôle contenus dans la table 79. De préférence, ces requêtes de mise à jour de la table 79 sont lissées dans temps de manière à ne pas provoquer des pics de charge sur le serveur 106.

En variante, le déchiffrements de chaque cryptogramme $CW^*_{i,t}$ contenu dans un message ECM transmis au serveur 106 est uniquement réalisé si les droits d'accès contenus dans ce même message ECM correspondent aux titres d'accès de l'utilisateur ayant envoyé ce message ECM.

D'autres méthodes de lissage dans le temps de l'envoi des requêtes au serveur 106 sont utilisables. Ces autres méthodes n'ont pas nécessairement recours au tirage d'un nombre aléatoire.

Dans une autre variante, la mise à jour ce la table 79 est limitée aux seuls enregistrements dont la durée de validité a expiré ou est sur le point de l'être. Pour cela, chaque requête transmise par un terminal au serveur 106 contient également une image des mots de contrôle actuellement contenus dans la table 79. Par exemple, cette image est constituée de l'identifiant $\underline{i}$ de canal associé au numéro d'ordre $N_{ECMi}$ dans la table 79. Dans ces conditions, le serveur 106 identifie le ou les seuls enregistrements pour lesquels une mise à jour est nécessaire et transmet uniquement ces enregistrements lors de l'étape 162. Cela permet de limiter la bande passante nécessaire pour l'envoie des tables locales par le serveur 106.

D'autres solutions que l'utilisation d'un tunnel sécurisé pour protéger la transmission des mots de contrôle entre un terminal et le serveur 106 sont possibles. Par exemple, chaque paire de mots de contrôle est chiffrée par le serveur 106 avec une clé privée K1 connue seulement du terminal vers lequel doit être transmis cette paire de mots de contrôle. La table de mots de contrôle transmise au terminal contient alors uniquement les cryptogrammes $E_{K1}(CW_{i,t})$ ainsi obtenus. Les autres informations de la table locale peuvent être non-chiffrée. De ce fait, les paires de mots de contrôle stockées dans le terminal le sont uniquement sous forme chiffrée. Le déchiffrement de ces paires de mots de contrôle intervient uniquement lorsque le désembrouillage du canal correspondant est commandé. Ceci accroît la sécurité.

Il existe d'autres solutions pour sécuriser la transmission des mots de contrôle du serveur 106 vers les terminaux. Par exemple, le dispositif 6 chiffre une première fois les mots de contrôle en clair avec une clé K1 puis une deuxième fois avec une clé K2. Les messages ECM contiennent alors le cryptogramme $E_{K2K1}(CW_{i,t})$ au lieu du cryptogramme $CW^*_{i,t}$. En réponse à une requête d'un terminal, le serveur 106 déchiffre une première fois le cryptogramme $E_{K2K1}(CW_{i,t})$ avec la clé K2 pour obtenir le mot de contrôle $E_{K1}(CW_{i,t})$. Ce mot de contrôle $E_{K1}(CW_{i,t})$ est transmis en réponse au terminal. Le mot de contrôle $E_{K1}(CW_{i,t})$ permet de désembrouiller le contenu multimédia après avoir été déchiffré une deuxième fois par le terminal avec la clé K1.

Le lissage des pics de charge est d'autant plus efficace que la durée des cryptopériodes est longue. Toutefois, au lieu d'allonger la durée d'une cryptopériode, il est également possible de réutiliser le même mot de contrôle sur plusieurs cryptopériodes successives. En effet, cela permet de répartir les requêtes adressées au serveur de mots de contrôle sur une durée plus longue. Toutefois, cette méthode présente l'avantage de permettre une comparaison des droits d'accès au titre d'accès de l'utilisateur durant chaque cryptopériode.

Un identifiant du terminal peut être utilisé en lieu et place de l'identifiant d'utilisateur.

Les caractéristiques des procédés des figures 3 et 4 peuvent être combinées.

**Revendications**

1. Procédé de déchiffrement de mots de contrôle pour un premier et au moins un deuxième terminal mécaniquement et électroniquement indépendants l'un de l'autre, dans lequel :

    - les premier et deuxième terminal transmettent (140, 142), respectivement, des cryptogrammes $CW^*_{1,t}$ et $CW^*_{2,t}$ à un même serveur de mots de contrôle,
    - en réponse, le serveur de mots de contrôle déchiffre (152) les cryptogrammes $CW^*_{1,t}$ et $CW^*_{2,t}$ pour obtenir, respectivement, des mots de contrôle $CW_{1,t}$ et $CW_{2,t}$, les mots de contrôle $CW_{1,t}$ et $CW_{2,t}$ permettant de désembrouiller, respectivement, des premier et deuxième contenu multimédia simultanément diffusés sur, respectivement, des premier et deuxième canal, puis
    - le serveur de mots de contrôle transmet (162) les mots de contrôle $CW_{1,t}$ et $CW_{2,t}$, respectivement, aux premier et deuxième terminal,

    **caractérisé en ce que** :

    - le serveur de mots de contrôle transmet (162) également au premier terminal le mot de contrôle $CW_{2,t}$ obtenu en déchiffrant le cryptogramme $CW^*_{2,t}$ transmis par le deuxième terminal avant même que le premier terminal change de canal désembrouillé en passant du premier vers le deuxième canal, et
    - en réponse au changement de canal, le premier terminal recherche (126; 178) d'abord si le mot de contrôle $CW_{2,t}$ a déjà été transmis en avance par le serveur de mots de contrôle avant même le changement de canal et, dans l'affirmative, le premier terminal commence immédiatement à désembrouiller (130) le contenu multimédia diffusé sur ce deuxième canal avec le mot de contrôle $CW_{2,t}$ transmis à l'avance.

2. Procédé de transmission de mots de contrôle $CW_{1,t}$ et $CW_{2,t}$ à des premier et deuxième terminal mécaniquement et électroniquement indépendant l'un de l'autre pour la mise en oeuvre d'un procédé conforme à la revendication 1, dans lequel :

    - en réponse à la transmission de cryptogrammes $CW^*_{1,t}$ et $CW^*_{2,t}$ par, respectivement, les premier et deuxième terminal, le même serveur de mots de contrôle déchiffre (152) les cryptogrammes $CW^*_{1,t}$ et $CW^*_{2,t}$ pour obtenir, respectivement, des mots de contrôle $CW_{1,t}$ et $CW_{2,t}$, les mots de contrôle $CW_{1,t}$ et $CW_{2,t}$ permettant de désembrouiller, respectivement, des premier et deuxième contenus multimédias simultanément diffusés sur, respectivement, des premier et deuxième canaux, puis
    - le serveur de mots de contrôle transmet (162) les mots de contrôle $CW_{1,t}$ et $CW_{2,t}$, respectivement, aux premier et deuxième terminal,

    **caractérisé en ce que** le serveur de mots de contrôle transmet (162) également au premier terminal le mot de contrôle $CW_{2,t}$ obtenu en déchiffrant le cryptogramme $CW^*_{2,t}$ transmis par le deuxième terminal avant même que le premier terminal change de canal désembrouillé en passant du premier vers le deuxième canal.

3. Procédé selon la revendication 2, dans lequel :

    - en réponse à la transmission d'un cryptogramme $CW^*_{3,t}$ au même serveur de mots de contrôle par un troisième terminal mécaniquement et électroniquement indépendant des premier et deuxième terminal, le serveur de mots de contrôle déchiffre (152) le cryptogramme $CW^*_{3,t}$ pour obtenir un mot de contrôle $CW_{3,t}$ permettant de désembrouiller un troisième contenu multimédia diffusé sur un troisième canal simultanément avec les premier et deuxième contenu multimédia, puis

- le serveur de mots de contrôle sélectionne (146 ; 194) le mot de contrôle $CW_{2,t}$ dans une table contenant au moins les mots de contrôle $CW_{2,t}$ et $CW_{3,t}$ et ne sélectionne pas le mot de contrôle $CW_{3,t}$, puis transmet (162) seulement les mots de contrôle sélectionnés dans cette table au premier terminal.

4. Procédé selon la revendication 3, dans lequel le serveur de mots de contrôle :

- construit (146 ; 194) pour chaque canal associé à des mots de contrôle contenus dans la table, un indice représentatif de la probabilité que ce canal soit prochainement désembrouillé par le premier terminal, et
- sélectionne (146 ; 194) dans la table le ou les mots de contrôle à transmettre au premier terminal en fonction de cet indice.

5. Procédé selon la revendication 4, dans lequel l'indice du deuxième canal est construit (146) à partir d'un dénombrement du nombre de transmissions du cryptogramme $CW*_{2,t}$ par d'autres terminaux mécaniquement et électroniquement indépendants du deuxième terminal.

6. Procédé selon l'une quelconque des revendications précédentes, dans lequel le serveur de mots de contrôle transmet (162) chaque mot de contrôle associé à un identifiant de la ou des cryptopériodes que ce mot de contrôle permet de désembrouiller.

7. Procédé de réception de mots de contrôle $CW_{1,t}$ et $CW_{2,t}$ par un premier terminal pour la mise en oeuvre d'un procédé conforme à la revendication 1, dans lequel :

- le premier terminal transmet (140; 142) à un serveur de mots de contrôle un cryptogramme $CW*_{1,t}$ et reçoit (162), en réponse, un mot de contrôle $CW_{1,t}$ déchiffré par ce serveur de mot de contrôle, ce mot de contrôle $CW_{1,t}$ permettant de désembrouiller un contenu multimédia diffusé sur un premier canal reçu par le premier terminal,
- le premier terminal reçoit (162) également un mot de contrôle $CW_{2,t}$ permettant de désembrouiller un autre contenu multimédia simultanément diffusé sur un deuxième canal, ce mot de contrôle $CW_{2,t}$ pouvant uniquement être obtenu par déchiffrement d'un cryptogramme $CW*_{2,t}$ par le serveur de mots de contrôle,
- le premier terminal change de canal désembrouillé en passant du premier vers le deuxième canal,

**caractérisé en ce que** :

- le premier terminal reçoit (162) le mot de contrôle $CW_{2,t}$ avant même que le premier terminal change de canal sans jamais avoir transmis le cryptogramme $CW*_{2,t}$ au préalable au serveur de mots de contrôle, et
- en réponse au changement de canal, le premier terminal recherche (126; 178) d'abord si le mot de contrôle $CW_{2,t}$ a déjà été transmis en avance par le serveur de mots de contrôle avant même le changement de canal et, dans l'affirmative, le premier terminal commence immédiatement à désembrouiller (130) le contenu multimédia diffusé sur ce deuxième canal avec le mot de contrôle $CW_{2,t}$ transmis à l'avance.

8. Procédé selon la revendication 7, dans lequel le premier terminal désembrouille (130) une t-ième cryptopériode du contenu multimédia diffusé sur le premier canal avec le mot de contrôle $CW_{1,t}$ et retarde (142) la transmission d'un cryptogramme $CW*_{1,t+1}$, pour désembrouiller une (t+1)-ième cryptopériode du contenu multimédia diffusé sur ce même canal, d'un délai déterminé pour étaler, au moins sur toute la durée de la t-ième cryptopériode, les instants de transmissions des cryptogrammes $CW*_{1,t+1}$ en provenance de différents terminaux mécaniquement et électriquement indépendants les uns des autres.

9. Procédé selon la revendication 7 ou 8, dans lequel si le mot de contrôle $CW_{2,t}$ n'a pas été transmis avant que le premier terminal change de canal, le premier terminal transmet (140) immédiatement le cryptogramme $CW*_{2,t}$ au serveur de mots de contrôle puis attend d'avoir reçu le mot de contrôle $CW_{2,t}$ transmis par le serveur de mots de contrôle avant de commencer à désembrouiller le contenu multimédia diffusé sur le deuxième canal.

10. Procédé selon l'une quelconque des revendications 7 à 9, dans lequel le premier terminal mémorise uniquement le mot de contrôle $CW_{2,t}$ sous forme d'un cryptogramme $E_{K1}(CW_{2,t})$ obtenu en chiffrant le mot de contrôle $CW_{2,t}$ avec une clé secrète K1, la clé K1 étant seulement connue du premier terminal et inconnue des autres terminaux.

11. Support d'enregistrement d'informations, **caractérisé en ce qu'**il comporte des instructions pour la mise en oeuvre de l'un quelconque des procédés ci-dessus, lorsque ces instructions sont exécutées par un calculateur électronique.

12. Serveur (106) de mots de contrôle pour la transmission de mots de contrôle $CW_{1,t}$ et $CW_{2,t}$ à des premier et deuxième terminal mécaniquement et électriquement indépendants l'un de l'autre pour la mise en oeuvre d'un procédé conforme à la revendication 1, ce serveur étant apte :

- en réponse à la transmission de cryptogrammes CW*$_{1,t}$ et CW*$_{2,t}$ par, respectivement, les premier et deuxième terminal, à déchiffrer les cryptogrammes CW*$_{1,t}$ et CW*$_{2,t}$ pour obtenir, respectivement, des mots de contrôle CW$_{1,t}$ et CW$_{2,t}$, les mots de contrôle CW$_{1,t}$ et CW$_{2,t}$ permettant de désembrouiller, respectivement, des premier et deuxième contenu multimédia simultanément diffusés sur, respectivement, des premier et deuxième canal,
- à transmettre les mots de contrôle CW$_{1,t}$ et CW$_{2,t}$, respectivement, aux premier et deuxième terminal,

**caractérisé en ce que** le serveur de mots de contrôle est également apte à transmettre au premier terminal le mot de contrôle CW$_{2,t}$ obtenu en déchiffrant le cryptogramme CW*$_{2,t}$ transmis par le deuxième terminal avant même que le premier terminal change de canal désembrouillé en passant du premier vers le deuxième canal.

**Patentansprüche**

1. Verfahren zum Entschlüsseln von Steuerworten für ein erstes und mindestens ein zweites Endgerät, die mechanisch und elektronisch voneinander unabhängig sind, wobei:

- das erste und das zweite Endgerät jeweils Kryptogramme CW*$_{1,t}$ und CW*$_{2,t}$ an den gleichen Steuerwort-Server übertragen (140, 142),
- der Steuerwort-Server als Antwort die Kryptogramme CW*$_{1,t}$ und CW*$_{2,t}$ entschlüsselt (152), um jeweils die Steuerwörter CW$_{1,t}$ und CW$_{2,t}$ zu erhalten, wobei die Steuerwörter CW$_{1,t}$ und CW$_{2,t}$ ermöglichen, einen ersten bzw. zweiten Multimediainhalt zu entwürfeln, die gleichzeitig auf dem ersten bzw. zweiten Kanal ausgestrahlt werden, und dann
- der Steuerwort-Server die Steuerwörter CW$_{1,t}$ und CW$_{2,t}$ an das erste bzw. zweite Endgerät überträgt (162),

**dadurch gekennzeichnet, dass**:

- der Steuerwort-Server an das erste Endgerät auch das Steuerwort CW$_{2,t}$ überträgt (162), das durch Entschlüsseln des Kryptogramms CW*$_{2,t}$ erhalten wird, das von dem zweiten Endgerät übertragen wird, noch bevor das erste Endgerät den entwürfelten Kanal ändert, indem es von dem ersten zum zweiten Kanal übergeht, und
- das erste Endgerät als Antwort auf das Ändern zunächst recherchiert (126; 178), ob das Steuerwort CW$_{2,t}$ bereits im Voraus noch vor dem Ändern des Kanals von dem Steuerwort-Server übertragen worden ist, und, wenn ja, beginnt das erste Endgerät sofort, den Multimediainhalt, der auf diesem zweiten Kanal ausgestrahlt wird, mit dem Steuerwort CW$_{2,t}$ zu entwürfeln (130), das im Voraus übertragen wird.

2. Verfahren zum Übertragen von Steuerworten CW$_{1,t}$ und CW$_{2,t}$ an ein erstes und zweites Endgerät, die mechanisch und elektronisch voneinander unabhängig sind, zum Umsetzen eines Verfahrens nach Anspruch 1, wobei:

- der gleiche Steuerwort-Server als Antwort auf das Übertragen von Kryptogrammen CW*$_{1,t}$ und CW*$_{2,t}$ durch das erste bzw. zweite Endgerät die Kryptogramme CW*$_{1,t}$ und CW*$_{2,t}$ entschlüsselt (152), um die Steuerwörter CW$_{1,t}$ bzw. CW$_{2,t}$ zu erhalten, wobei die Steuerwörter CW$_{1,t}$ und CW$_{2,t}$ ermöglichen, einen ersten bzw. zweiten Multimediainhalt zu entwürfeln, die gleichzeitig auf dem ersten bzw. zweiten Kanal ausgestrahlt werden, und dann
- der Steuerwort-Server die Steuerwörter CW$_{1,t}$ und CW$_{2,t}$ an das erste bzw. zweite Endgerät überträgt (162),

**dadurch gekennzeichnet, dass** der Steuerwort-Server an das erste Endgerät auch das Steuerwort CW$_{2,t}$ überträgt (162), das durch Entschlüsseln des Kryptogramms CW*$_{2,t}$ erhalten wird, das von dem zweiten Endgerät übertragen wird, noch bevor das erste Endgerät den entwürfelten Kanal ändert, indem es von dem ersten zum zweiten Kanal übergeht.

3. Verfahren nach dem Anspruch 2, wobei:

- als Antwort auf das Übertragen eines Kryptogramms CW*$_{3,t}$ an den gleichen Steuerwort-Server durch ein drittes Endgerät, das mechanisch und elektronisch von dem ersten und zweiten Endgerät unabhängig ist, der Steuerwort-Server das Kryptogramm CW*$_{3,t}$ entschlüsselt (152), um ein Steuerwort CW$_{3,t}$ zu erhalten, das ermöglicht, einen dritten Multimediainhalt zu entwürfeln, der auf einem dritten Kanal gleichzeitig mit dem ersten und zweiten Multimediainhalt ausgestrahlt wird, und dann
- der Steuerwort-Server das Steuerwort CW$_{2,t}$ aus einer Tabelle auswählt (146; 194), die mindestens die Steuerwörter CW$_{2,t}$ und CW$_{3,t}$ enthält, und nicht das Steuerwort CW$_{3,t}$ auswählt, und dann nur die Steuerwörter an das erste Endgerät überträgt (162), die aus dieser Tabelle ausgewählt werden.

**4.** Verfahren nach Anspruch 3, wobei der Steuerwort-Server:

- für jeden Kanal, der Steuerwörtern zugeordnet wird, die in der Tabelle enthalten sind, einen Index konstruiert (146; 194), der für die Wahrscheinlichkeit repräsentativ ist, dass dieser Kanal demnächst von dem ersten Endgerät entwürfelt wird, und
- aus der Tabelle das oder die Steuerwörter auswählt (146; 194), die an das erste Endgerät in Abhängigkeit von diesem Index zu übertragen sind.

**5.** Verfahren nach Anspruch 4, wobei der Index des zweiten Kanals ausgehend von einer Zählung der Anzahl der Übertragungen des Kryptogramms $CW^*_{2,t}$ durch andere Endgeräte, die mechanisch und elektronisch von dem ersten Endgerät unabhängig sind, konstruiert wird (146).

**6.** Verfahren nach einem der vorhergehenden Ansprüche, wobei der Steuerwort-Server jedes Steuerwort überträgt (162), das einer Kennung der oder den Kryptoperioden zugeordnet wird, die dieses Steuerwort ermöglicht, zu entwürfeln.

**7.** Verfahren zum Empfangen von Steuerworten $CW_{1,t}$ und $CW_{2,t}$ durch ein erstes Endgerät zum Umsetzen eines Verfahrens gemäß Anspruch 1, wobei:

- das erste Endgerät ein Kryptogramm $CW^*_{1,t}$ an einen Steuerwort-Server überträgt (140; 142) und als Antwort ein Steuerwort $CW_{1,t}$ empfängt (162), das von diesem Steuerwort-Server entschlüsselt wird, wobei dieses Steuerwort $CW_{1,t}$ ermöglicht, einen Multimediainhalt zu entwürfeln, der auf einem ersten Kanal ausgestrahlt wird, der von dem ersten Endgerät empfangen wird,
- das erste Endgerät auch ein Steuerwort $CW_{2,t}$ empfängt (162), das ermöglicht, einen anderen Multimediainhalt zu entwürfeln, der gleichzeitig auf einem zweiten Kanal ausgestrahlt wird, wobei dieses Steuerwort $CW_{2,t}$ nur durch Entziffern eines Kryptogramms $CW^*_{2,t}$ durch den Steuerwort-Server erhalten werden kann,
- wobei das erste Endgerät den entwürfelten Kanal ändert, indem es von dem ersten zu dem zweiten Kanal übergeht,

**dadurch gekennzeichnet, dass**:

- das erste Endgerät das Steuerwort $CW_{2,t}$ empfängt (162), noch bevor das erste Endgerät den entwürfelten Kanal ändert, ohne jemals das Kryptogramm $CW^*_{2,t}$ zuvor an den Steuerwort-Server übertragen zu haben, und

- das erste Endgerät als Antwort auf das Ändern zunächst recherchiert (126; 178), ob das Steuerwort $CW_{2,t}$ bereits im Voraus noch vor dem Ändern des Kanals von dem Steuerwort-Server übertragen worden ist, und, wenn ja, das erste Endgerät sofort beginnt, den Multimediainhalt, der auf diesem zweiten Kanal ausgestrahlt wird, mit dem Steuerwort $CW_{2,t}$ zu entwürfeln (130), das im Voraus übertragen wird.

**8.** Verfahren nach Anspruch 7, wobei das erste Endgerät eine t-te Kryptoperiode des Multimediainhalts, der auf dem ersten Kanal ausgestrahlt wird, mit dem Steuerwort $CW_{1,t}$ entwürfelt (130) und das Übertragungen eines Kryptogramms $CW^*_{1,t+1}$, um eine (t+1)-te Kryptoperiode des Multimediainhalts zu entwürfeln, der auf diesem gleichen Kanal ausgestrahlt wird, um eine bestimmte Frist verzögert (142), um mindestens über die gesamte Dauer der t-ten Kryptoperiode die Zeitpunkte von Übertragungen von Kryptogrammen $CW^*_{1,t+1}$ von verschiedenen Endgeräten, die mechanisch und elektrisch voneinander unabhängig sind, auszubreiten.

**9.** Verfahren nach Anspruch 7 oder 8, wobei, wenn das Steuerwort $CW_{2,t}$ nicht übertragen worden ist, bevor das erste Endgerät den Kanal ändert, das erste Endgerät sofort das Kryptogramm $CW^*_{2,t}$ an den Steuerwort-Server überträgt (140) und dann wartet, bis es das Steuerwort $CW_{2,t}$ erhalten hat, das von dem Steuerwort-Server übertragen wird, bevor es damit beginnt, den Multimediainhalt zu entwürfeln, der auf dem zweiten Kanal ausgestrahlt wird.

**10.** Verfahren nach einem der Ansprüche 7 bis 9, wobei das erste Endgerät nur das Steuerwort $CW_{2,t}$ in Form von einem Kryptogramm $E_{K1}(CW_{2,t})$ speichert, das erhalten wird, indem das Steuerwort $CW_{2,t}$ mit einem Geheimschlüssel K1 verschlüsselt wird, wobei der Schlüssel K1 nur dem ersten Endgerät bekannt ist und den anderen Endgeräten unbekannt ist.

**11.** Informationsaufzeichnungsmedium, **dadurch gekennzeichnet, dass** es Anweisungen zum Umsetzen eines der oben genannten Verfahren aufweist, wenn diese Anweisungen von einem elektronischen Rechner ausgeführt werden.

**12.** Steuerwort-Server (106) zum Übertragen von Steuerworten $CW_{1,t}$ und $CW_{2,t}$ an ein erstes und zweites Endgerät, die mechanisch und elektronisch voneinander unabhängig sind, zum Umsetzen eines Verfahrens nach Anspruch 1, wobei dieser Server geeignet ist:

- als Antwort auf das Übertragen von Kryptogrammen $CW^*_{1,t}$ und $CW^*_{2,t}$ durch das erste bzw. zweite Endgerät die Kryptogramme $CW^*_{1,t}$

und CW*$_{2,t}$ zu entschlüsseln, um die Steuerwörter CW$_{1,t}$ bzw. CW$_{2,t}$ zu erhalten, wobei die Steuerwörter CW$_{1,t}$ und CW$_{2,t}$ ermöglichen, einen ersten bzw. zweiten Multimediainhalt zu entwürfeln, die gleichzeitig auf dem ersten bzw. zweiten Kanal ausgestrahlt werden,
- die Steuerwörter CW$_{1,t}$ und CW$_{2,t}$ an das erste bzw. zweite Endgerät zu übertragen,

**dadurch gekennzeichnet, dass** der Steuerwort-Server ebenfalls geeignet ist, an das erste Endgerät das Steuerwort CW$_{2,t}$ zu übertragen, das durch Entschlüsseln des Kryptogramms CW*$_{2,t}$ erhalten ist, das von dem zweiten Endgerät übertragen ist, noch bevor das erste Endgerät den entwürfelten Kanal ändert, indem es von dem ersten zum zweiten Kanal übergeht.

**Claims**

1. Method for decryption of control words for a first and at least a second terminal mechanically and electronically independent from one another, in which:

    - the first and second terminal respectively transmit (140, 142) cryptograms CW*$_{1,t}$ and CW*$_{2,t}$ to the same control word server,
    - in response, the control word server decrypts (152) the cryptograms CW*$_{1,t}$ and CW*$_{2,t}$ so as to obtain, respectively, control words CW$_{1,t}$ and CW$_{2,t}$, the control words CW$_{1,t}$ and CW$_{2,t}$ respectively allowing the unscrambling of first and second multimedia contents simultaneously broadcast over, respectively, first and second channels, then
    - the control word server transmits (162) the control words CW$_{1,t}$ and CW$_{2,t}$, respectively, to the first and second terminal,

    **characterized in that**:

    - the control word server also transmits (162) to the first terminal the control word CW$_{2,t}$ obtained by decrypting the cryptogram CW*$_{2,t}$ transmitted by the second terminal even before the first terminal changes unscrambled channel, switching from the first to the second channel, and
    - in response to the change of channel, the first terminal first checks (126; 178) whether the control word CW$_{2,t}$ has already been transmitted in advance by the control word server even before the change of channel and, in the affirmative, the first terminal immediately begins to unscramble (130) the multimedia content broadcast over this second channel with the control word CW$_{2,t}$ transmitted in advance.

2. Method for transmission of control words CW$_{1,t}$ and CW$_{2,t}$ to first and second terminals mechanically and electronically independent from one another for the implementation of a method according to Claim 1, in which:

    - in response to the transmission of cryptograms CW*$_{1,t}$ and CW*$_{2,t}$ by, respectively, the first and the second terminal, the same control word server decrypts (152) the cryptograms CW*$_{1,t}$ and CW*$_{2,t}$ so as to obtain, respectively, control words CW$_{1,t}$ and CW$_{2,t}$, the control words CW$_{1,t}$ and CW$_{2,t}$ respectively allowing the unscrambling of first and second multimedia contents simultaneously broadcast over, respectively, first and second channels, then
    - the control word server transmits (162) the control words CW$_{1,t}$ and CW$_{2,t}$, respectively, to the first and second terminal,

    **characterized in that** the control word server also transmits (162) to the first terminal the control word CW$_{2,t}$ obtained by decrypting the cryptogram CW*$_{2,t}$ transmitted by the second terminal even before the first terminal changes unscrambled channel, switching from the first to the second channel.

3. Method according to Claim 2, in which:

    - in response to the transmission of a cryptogram CW*$_{3,t}$ to the same control word server by a third terminal mechanically and electronically independent from the first and second terminal, the control word server decrypts (152) the cryptogram CW*$_{3,t}$ so as to obtain a control word CW$_{3,t}$ allowing the unscrambling of a third multimedia content broadcast over a third channel simultaneously with the first and second multimedia content, then
    - the control word server selects (146; 194) the control word CW$_{2,t}$ in a table containing at least the control words CW$_{2,t}$ and CW$_{3,t}$ and does not select the control word CW$_{3,t}$, then transmits (162) only the control words selected in this table to the first terminal.

4. Method according to Claim 3, in which the control word server:

    - constructs (146; 194) for each channel associated with control words contained in the table, an index representative of the probability that this channel is next to be unscrambled by the first terminal, and
    - selects (146; 194) in the table the control word or words to be transmitted to the first terminal as a function of this index.

5. Method according to Claim 4, in which the index of the second channel is constructed (146) based on counting the number of transmissions of the cryptogram $CW^*_{2,t}$ by other terminals mechanically and electronically independent from the second terminal.

6. Method according to any one of the preceding claims, in which the control word server transmits (162) each control word associated with an identifier of the cryptoperiod or cryptoperiods that this control word allows to be unscrambled.

7. Method for receiving control words $CW_{1,t}$ and $CW_{2,t}$ by a first terminal for the implementation of a method according to Claim 1, in which:

- the first terminal transmits (140; 142) to a control word server a cryptogram $CW^*_{1,t}$ and receives (162), in response, a control word $CW_{1,t}$ decrypted by this control word server, this control word $CW_{1,t}$ allowing a multimedia content broadcast over a first channel received by the first terminal to be unscrambled,
- the first terminal also receives (162) a control word $CW_{2,t}$ allowing another multimedia content simultaneously broadcast over a second channel to be unscrambled, this control word $CW_{2,t}$ only being obtainable by decryption of a cryptogram $CW^*_{2,t}$ by the control word server,
- the first terminal changes unscrambled channel, switching from the first to the second channel,

**characterized in that**:

- the first terminal receives (162) the control word $CW_{2,t}$ even before the first terminal changes channel without ever having transmitted the cryptogram $CW^*_{2,t}$ beforehand to the control word server, and
- in response to the change of channel, the first terminal first checks (126; 178) whether the control word $CW_{2,t}$ has already been transmitted in advance by the control word server even before the change of channel and, in the affirmative, the first terminal immediately begins to unscramble (130) the multimedia content broadcast over this second channel with the control word $CW_{2,t}$ transmitted in advance.

8. Method according to Claim 7, in which the first terminal unscrambles (130) a t-th cryptoperiod of the multimedia content broadcast over the first channel with the control word $CW_{1,t}$ and delays (142) the transmission of a cryptogram $CW^*_{1,t+1}$, for unscrambling a (t+1)-th cryptoperiod of the multimedia content broadcast over this same channel, by a given period in order to spread out, at least over the whole duration of the t-th cryptoperiod, the transmission times for the cryptograms $CW^*_{1,t+1}$ coming from the various terminals mechanically and electrically independent from one another.

9. Method according to either of Claims 7 and 8, in which if the control word $CW_{2,t}$ has not been transmitted before the first terminal changes channel, the first terminal immediately transmits (140) the cryptogram $CW^*_{2,t}$ to the control word server then waits until it has received the control word $CW_{2,t}$ transmitted by the control word server before starting to unscramble the multimedia content broadcast over the second channel.

10. Method according to any one of Claims 7 to 9, in which the first terminal only stores the control word $CW_{2,t}$ in the form of a cryptogram $E_{K1}(CW_{2,t})$ obtained by encrypting the control word $CW_{2,t}$ with a secret key K1, the key K1 only being known to the first terminal and unknown to the other terminals.

11. Information storage medium, **characterized in that** it comprises instructions for the implementation of any one of the methods hereinabove, when these instructions are executed by an electronic computer.

12. Control word server (106) for the transmission of control words $CW_{1,t}$ and $CW_{2,t}$ to first and second terminals mechanically and electrically independent from one another for the implementation of a method according to Claim 1, this server being capable of:

- in response to the transmission of cryptograms $CW^*_{1,t}$ and $CW^*_{2,t}$ by, respectively, the first and second terminal, decrypting the cryptograms $CW^*_{1,t}$ and $CW^*_{2,t}$ so as to obtain, respectively, control words $CW_{1,t}$ and $CW_{2,t}$, the control words $CW_{1,t}$ and $CW_{2,t}$ respectively allowing the unscrambling of first and second multimedia contents simultaneously broadcast over, respectively, first and second channels,
- transmitting the control words $CW_{1,t}$ and $CW_{2,t}$, respectively, to the first and second terminal,

**characterized in that** the control word server is also capable of transmitting to the first terminal the control word $CW_{2,t}$ obtained by decrypting the cryptogram $CW^*_{2,t}$ transmitted by the second terminal even before the first terminal changes unscrambled channel, switching from the first to the second channel.

Fig.1

i    $CW_t$    $CW_{t+1}$    CA    DV    MAC    $t_{recept}$

112

## Fig.2

## Fig.3

120

122

124

126

128

130

132

134

127

138

140

142

146

148

152    154

150

160

162

144

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007124807 A1
- US 5719941 A
- EP 1705915 A

**Littérature non-brevet citée dans la description**

- **MENEZS ; VANSTONE ; OORSCHOT.** Handbook of Applied Cryptography. CRC Press LLC, 1997, 547-555
- **L. FRANCIS et al.** *Countermeasures for Attacks on Satellite TV Cards Using Open Receivers,* 2005
- Functional Model of Conditional Access System. *EBU Review, Technical European Broadcasting Union,* 21 Décembre 1995